# EUROPEAN PATENT APPLICATION

(11) **EP 4 116 375 A1**
(43) Date of publication of application: **11.01.2023**
(21) Application number: 21908074.4
(22) Date of filing: 04.06.2021
(51) Int. Cl.: C08L 27/18

(54) **PTFE COMPOSITE POWDER, PREPARATION METHOD, AND COMPOSITE MATERIAL CONTAINING PTFE COMPOSITE POWDER**

(30) Priority: 28.05.2021 CN 202110594664
(71) Applicant: Bengbu Estone Polymer Composites Co., Ltd., Bengbu, Anhui 233400 (CN)
(72) Inventor: WANG, Shaohui, Bengbu, Anhui 233400 (CN); GONG, Xuebing, Bengbu, Anhui 233400 (CN); QIN, Yongfa, Bengbu, Anhui 233400 (CN); JIANG, Xuexin, Bengbu, Anhui 233400 (CN)
(74) Representative: Bayramoglu et al.
(86) International application number: PCT/CN2021/098245
(87) International publication number: WO 2022/246892

(57) **Abstract**

The present invention discloses a PTFE composite powder, a preparation method thereof, and a composite material containing the same, relating to the technical field of PTFE powders. The PTFE composite powder includes the following components: a PTFE powder, an inorganic powder, and a surface treatment agent. The inorganic powder is coated on a surface of the PTFE powder to form an inorganic powder layer, and the surface treatment agent is coated on the inorganic powder layer. For the composite material obtained by the present invention, the compatibility between the PTFE composite powder and matrix polymer is better than that of the prior art, leading to larger addition amount, and smaller dielectric constant and dielectric loss of the composite material, thus suitable for being used as 5G materials.

## Description

### TECHNICCAL FIELD

The present invention belongs to the technical field of polytetrafluoroethylene (PTFE) powders, and particularly relates to a PTFE composite powder, a preparation method thereof, and a composite material containing the powder.

### BACKGROUND

Polytetrafluoroethylene (Teflon or PTFE), commonly known as "Plastic King", is a polymer compound formed by polymerization of tetrafluoroethylene. PTFE has excellent chemical stability, corrosion resistance, and sealing performance, possesses good stain resistance, high lubrication without viscidity, prominent electrical insulation, heat resistance, weathering resistance, and wear resistance, and high toughness and strength, thus can be fabricated into PTFE pipes, rods, belts, plates, films, etc. In addition to being processed into a specific shape for direct application, PTFE can also be made into powders and filled in other materials to prepare a composite material, where the properties of other materials are improved.

However, PTFE has high crystallinity and low surface energy, resulting in poor compatibility with other polymers though the surface of PTFE is hydrophobic. As such, when PTFE powders and other polymers form a composite material, the interface bonding appears to be weak between the materials, showing poor mutual viscosity.

In addition, PTFE has excellent dielectric properties, with dielectric constant (2.1) and dielectric loss (0.0003) being lower than most polymers, which is very suitable for being used as materials for 5G high-frequency high-speed communication, such as fabrication of high-frequency high-speed copper clad laminates (CCLs) and printed circuit boards. However, when PTFE directly serves as a CCL substrate, processability thereof is undesirable due to low hardness and other reasons. Therefore, most traditional CCLs use epoxy resin as a substrate. However, the dielectric constant (3.6) and dielectric loss (0.025) of epoxy resin are relatively high, which need to be further reduced when being used in 5G materials. If PTFE powders with low dielectric constant and dielectric loss can be modified by an appropriate method to improve its compatibility with other polymers, PTFE powders can be used as a modifying agent for dielectric properties of epoxy resin-based or other matrix polymers, such as hydrocarbon resin, polyphenylene ether (PPO), liquid crystal polymer (LCP), etc., achieving the purpose of further reducing the dielectric constant and dielectric loss, so that 5G high-frequency high-speed technology can be realized from material aspect, and meanwhile, the disadvantage of poor processability of PTFE when being used alone is avoided.

In order to solve the above problems, current methods for PTFE surface modification mainly include sodium-naphthalene solution chemical treatment, plasma treatment, high-energy ray or ultraviolet irradiation grafting, and excimer laser treatment. Among them, the sodium-naphthalene solution chemical treatment produces a good treatment effect of improving the surface hydrophilicity by removing some fluorine atoms on the surface and introducing polar groups such as C=C, C=O, and COOH. However, PTFE is prone to discoloring after the treatment and losing the treatment effect after long-term exposure to the air, moreover, a large amount of waste liquids needs to be disposed, which is not conducive to environmental protection and poses dangers. Besides, the treated PTFE has specific polar groups on the surface, which endows PTFE with good compatibility only with substances having similar structures, limiting the use of PTFE powders to combine with other substances. Other methods, though being relatively environmentally friendly, are generally suitable for treating surfaces of PTFE products with a fixed shape, and impotent in terms of powdery PTFE. Moreover, plasma treatment, high-energy ray or ultraviolet irradiation grafting, and excimer laser treatment require expensive equipment, yield low production efficiency, hardly realize large-scale industrial production, and hardly maintain a long-lasting modification effect.

### SUMMARY

The first objective of the present invention is to provide a PTFE composite powder, so as to solve the problems of weak interface bonding and poor compatibility between PTFE powders and other polymers caused by low surface energy of PTFE powders. The powder can maintain a stable and long-lasting treatment effect, and is well compatible with various polymers by adjusting the composition. The objective is achieved by the following technical solution:

A PTFE composite powder, including the following components: a PTFE powder, an inorganic powder, and a surface treatment agent, wherein the inorganic powder is coated on a surface of the PTFE powder to form an inorganic powder layer, and the surface treatment agent is coated on the inorganic powder layer.

A mass ratio of the PTFE powder, the inorganic powder, and the surface treatment agent is 100:(1-50):(0.01-10).

A particle size of the PTFE powder is 0.2 µm to 40 µm.

The PTFE powder also includes other fluoroplastic powders with low surface energy.

The inorganic powder includes at least one of oxide, hydroxide, carbide, boride, sulfide, and nitride, and has a particle size of 1 nm to 0.4 µm. The inorganic powder is insoluble in water and does not undergo a chemical reaction.

The surface treatment agent includes one or more of a silane coupling agent, a titanate coupling agent, an aluminate coupling agent, stearic acid, and stearate.

In order to finally achieve good compatibility between the PTFE powder and a target polymer, improve a dispersion of the PTFE powder in the polymer, enhance the interface bonding with the target polymer, and improve the performance of the composite material, a surface treatment agent that is well compatible with the polymer used can be selected.

The second objective of the present invention is to provide a preparation method of the PTFE composite powder, in which a sodium-naphthalene treatment solution is not used.

A preparation method of the PTFE composite powder, including the following steps:
step (1): adding a dispersant and the PTFE powder into a solvent consisting of at least one of water and an organic solvent to obtain a PTFE dispersion fluid;
step (2): stirring an inorganic powder precursor and the PTFE dispersion fluid of step (1) evenly, and adjusting a pH value to be alkaline, enabling the precursor to react and be deposited uniformly on the surface of the PTFE powder, filtering, washing with water, and drying to obtain an inorganic-coated hydrophilic PTFE powder;
step (3): treating the inorganic-coated hydrophilic PTFE powder obtained in step (2) with a surface treatment agent to obtain an organic-coated hydrophobic PTFE composite powder.

The dispersant in step (1) is one or more of an anionic surfactant, a cationic surfactant, an amphoteric surfactant, and a nonionic surfactant. Different types of surfactants can be used where there is no conflict.

The anionic surfactant includes, but is not limited to, those of higher fatty acid soap type, alkyl sulfate type, alkyl sulfonate type, alkyl phosphate type, and alkylamide betaine type.

The cationic surfactant includes, but is not limited to, those of quaternary ammonium salt type, pyridine halide type, imidazoline compound type, and alkyl phosphate substituted amine type.

The amphoteric surfactant includes, but is not limited to, those of amino acid type and betaine type.

The nonionic surfactant includes, but is not limited to, those of polyoxyethylene ether type and polyol type.

The dispersant in step (1) is preferably the nonionic surfactant, because its electrical neutrality, relatively low critical micelle concentration, and relatively low surface tension enable a PTFE emulsion to have good dispersibility and increased solid content.

The organic solvent in step (1) includes, but is not limited to, one or more of methanol, ethanol, acetone, ethylene glycol, isopropanol, dimethyl sulfoxide, N,N-dimethylformamide, N,N-dimethylacetamide, tetrahydrofuran, and dioxane.

In order to achieve a better dispersion effect, preferably, in step (1), the dispersant is added to the solvent first, and then the PTFE powder is added for dispersion.

In order to further improve the dispersion effect, the PTFE dispersion fluid is ball milled or ground.

The inorganic powder precursor includes, but is not limited to, aluminum nitrate, ethyl orthosilicate, methyl orthosilicate, tert-butyl ester silicate, silica sol, aluminum sol, sodium silicate, aluminum sulfate, sodium aluminate, aluminum chloride, trimethylaluminum, triethylaluminum, aluminum sec-butoxide, and aluminum isopropoxide, and other raw materials that can react to obtain the inorganic powder can also be used as the precursor.

When the inorganic powder precursor is ethyl orthosilicate, in order to achieve the effect of uniform coating, the pH value is adjusted to be alkaline, followed by stirring evenly, and then adding acid for catalysis. The acid is preferably hydrofluoric acid.

In step (2), at least one of inorganic powder, inorganic powder dispersion fluid, and inorganic powder sol may also be added to perform coating together with the inorganic powder precursor.

The equipment used for stirring in step (2) includes one or two of a magnetic stirrer, an electric stirrer, an ultrasonic disperser, and a ball miller; the filtering includes vacuum filtration, centrifugation, pressure filtration, and the like.

The water washing in step (2) is to conduct a uniform re-dispersion in deionized water and then filter again, with 1 to 5 repeats, or to perform an ion cleaning for continuous cleaning for 4-15 h.

The equipment used for drying in step (2) includes a blast drying oven, a vacuum oven, a muffle furnace, an atmosphere furnace, etc., which works at a temperature of 50-350°C for 2-8 h.

The third objective of the present invention is to provide a composite material containing the above-mentioned PTFE composite powder. The composite material has low dielectric constant and low dielectric loss.

A matrix polymer of the composite material includes, but is not limited to, at least one of epoxy resin, hydrocarbon resin, polyphenylene ether, and liquid crystal polymer.

### Beneficial effects of the present invention:

1. In the present invention, since the dispersant has an end with a lipophilic group and another end with a hydrophilic group, during preparation, the lipophilic group of the dispersant is combined with the PTFE powder, and the inorganic powder precursor is precipitated and combined with the hydrophilic group, thereby implementing the coating of the inorganic powder on the PTFE power to obtain the inorganic-coated hydrophilic PTFE powder. Subsequently, the inorganic coating layer is treated with the surface treatment agent to achieve good compatibility between the PTFE powder and polymer, and different surface treatment agents can be selected according to the type of polymer, leading to a wider application range compared with the prior art.
   Compared with the existing direct interface contact of PTFE powder and polymer, the present invention allows inorganic powder and polymer that are well compatible to contact each other instead of the direct interface contact between PTFE powder and polymer by using the inorganic powder layer with surface hydrophobic treatment as a transition. Therefore, the PTFE composite powder obtained by the present invention has good compatibility with polymer.
2. Since the performance of the inorganic and organic coating layers on the surface of the PTFE composite powder of the present invention is relatively stable, the modification effect can be maintained for a long time.
3. Since raw materials such as sodium-naphthalene treatment solution are not used in the preparation method of the present invention, less risk will be caused, and simple equipment is required, so that it is suitable for industrial production.
4. For the composite material obtained by the present invention, the compatibility between the PTFE composite powder and matrix polymer is better than that of the prior art, leading to larger addition amount, and smaller dielectric constant and dielectric loss of the composite material, thus suitable for being used as 5G materials.

### BRIEF DESCRIPTION OF THE DRAWINGS

FIG. 1 is a scanning electron microscope (SEM) image of raw material PTFE powder;
FIG. 2 to FIG. 10 are SEM images of PTFE composite powders prepared in Embodiments 1-9 in sequence;
FIG. 11 and FIG. 12 are diagrams showing dispersions of PTFE powder and PTFE composite powder in epoxy resin, respectively.

### DETAILED DESCRIPTION OF THE EMBODIMENTS

In order to make the technical means, inventive features, objectives to be achieved, and effects of the present invention easy to understand, the present invention will be further described below with reference to specific embodiments and drawings.

Raw materials used in the present invention are as follows:
Dispersant: cetyltrimethylammonium bromide (CTAB), polyethylene glycol octylphenyl ether, and polyoxyethylene octylphenol ether
Silane coupling agent; KH560, A-137, and A-171

### Embodiment 1

Step (1): 1.5 g of CTAB and 100 g of PTFE powder are added into 100 g of water for uniform dispersion to obtain a PTFE dispersion fluid.
Step (2): 36.76 g of Al(NO₃)₃·9H₂O is added to the PTFE dispersion fluid of step (1) and stirred evenly, and ammonia water is added to adjust a pH value to 8-9, followed by stirring for 0.5 h, performing a vacuum filtration, conducting a continuous cleaning for 6 h using an ion cleaning machine, and drying at 200°C for 5 h to obtain an inorganic-coated hydrophilic PTFE powder.
Step (3): the inorganic-coated hydrophilic PTFE powder obtained in step (2) is re-stirred and ultrasonically dispersed in 200 g of water, followed by adding 1 g of ethanol, 1 g of KH-560, and 0.25 g of water. Pure acetic acid is used to adjust a pH to 3-4. A magnetic stirring is conducted at 25°C for 30 min and room temperature for 2 h, followed by performing a vacuum filtration and drying at 120°C for 10 h to obtain a PTFE composite powder. A weight ratio of PTFE powder, inorganic powder, and surface treatment agent in the PTFE composite powder is 100:5:1.

### Embodiment 2

Step (1): 5 g of CTAB and 100 g of PTFE powder are added into 50 g of water for uniform dispersion to obtain a PTFE dispersion fluid.
Step (2): 294.12 g of Al(NO₃)₃·9H₂O is added to the PTFE dispersion fluid of step (1) and stirred evenly, and ammonia water is added to adjust a pH value to 8-9, followed by mechanically stirring at 25°C for 0.5 h, performing a vacuum filtration, conducting a continuous cleaning for 6 h using an ion cleaning machine, and drying at 200°C for 5 h to obtain an inorganic-coated hydrophilic PTFE powder.
Step (3): the inorganic-coated hydrophilic PTFE powder obtained in step (2) is re-stirred and ultrasonically dispersed in 200 g of water, followed by adding 5 g of ethanol, 5 g of KH-560, and 1.25 g of water. Pure acetic acid is used to adjust a pH to 3-4. A magnetic stirring is conducted at 25°C for 30 min and room temperature for 2 h, followed by performing a vacuum filtration and drying at 120°C for 10 h to obtain a PTFE composite powder. A weight ratio of PTFE powder, inorganic powder, and surface treatment agent in the PTFE composite powder is 100:40:5.

### Embodiment 3

Step (1): 2 g of CTAB and 100 g of PTFE powder are added into 150 g of water for uniform dispersion to obtain a PTFE dispersion fluid.
Step (2): 73.53 g of Al(NO₃)₃·9H₂O is added to the PTFE dispersion fluid of step (1) and stirred evenly, and ammonia water is added to adjust a pH value to 8-9, followed by mechanically stirring at 25°C for 0.5 h, performing a vacuum filtration, conducting a continuous cleaning for 6 h using an ion cleaning machine, and drying at 200°C for 5 h to obtain an inorganic-coated hydrophilic PTFE powder.
Step (3): the inorganic-coated hydrophilic PTFE powder obtained in step (2) is re-stirred and ultrasonically dispersed in 200 g of water, followed by adding 3 g of ethanol, 3 g of KH-560, and 0.75 g of water. Pure acetic acid is used to adjust a pH to 3-4. A magnetic stirring is conducted at 25°C for 30 min and room temperature for 2 h, followed by performing a vacuum filtration and drying at 120°C for 10 h to obtain a PTFE composite powder. A weight ratio of PTFE powder, inorganic powder, and surface treatment agent in the PTFE composite powder is 100:10:3.

### Embodiment 4

Step (1): 2 g of CTAB and 100 g of PTFE powder are added into 150 g of ethanol for uniform dispersion via ball milling to obtain a PTFE dispersion fluid.
Step (2): 147.06 g of Al(NO₃)₃·9H₂O is added to the PTFE dispersion fluid of step (1) and stirred evenly, and ammonia water is added to adjust a pH value to 8-9, followed by mechanically stirring at 25°C for 0.5 h, performing a vacuum filtration, conducting a uniform re-dispersion in deionized water and then filtration again, with 3 repeats, and drying at 200°C for 5 h to obtain an inorganic-coated hydrophilic PTFE powder.
Step (3): the inorganic-coated hydrophilic PTFE powder obtained in step (2) is re-stirred and ultrasonically dispersed in 200 g of water, followed by adding 3 g of ethanol, 3 g of KH-560, and 0.75 g of water. Pure acetic acid is used to adjust a pH to 3-4. A magnetic stirring is conducted at 25°C for 30 min and room temperature for 2 h, followed by performing a vacuum filtration and drying at 120°C for 10 h to obtain a PTFE composite powder. A weight ratio of PTFE powder, inorganic powder, and surface treatment agent in the PTFE composite powder is 100:20:3.

### Embodiment 5

Step (1): 1.5 g of CTAB and 100 g of PTFE powder are added into a solvent consisting of 100 g of water and 100 g of ethanol for uniform dispersion to obtain a PTFE dispersion fluid.
Step (2): 73.53 g of Al(NO₃)₃·9H₂O is added to the PTFE dispersion fluid of step (1) and stirred evenly, and ammonia water is added to adjust a pH value to 8-9, followed by mechanically stirring at 25°C for 0.5 h, performing a vacuum filtration, conducting a uniform re-dispersion in deionized water and then filtration again, with 3 repeats, and drying at 200°C for 5 h to obtain an inorganic-coated hydrophilic PTFE powder.
Step (3): the inorganic-coated hydrophilic PTFE powder obtained in step (2) is re-stirred and ultrasonically dispersed in 200 g of water, followed by adding 3 g of ethanol, 3 g of KH-560, and 0.75 g of water. Pure acetic acid is used to adjust a pH to 3-4. A magnetic stirring is conducted at 25°C for 30 min and room temperature for 2 h, followed by performing a vacuum filtration and drying at 120°C for 10 h to obtain a PTFE composite powder. A weight ratio of PTFE powder, inorganic powder, and surface treatment agent in the PTFE composite powder is 100:10:3.

### Embodiment 6

Step (1): 2 g of polyethylene glycol octylphenyl ether and 100 g of PTFE powder are added into 200 g of water for uniform dispersion, and 10% sodium hydroxide is used to adjust a pH value of the system to 9-10 to obtain a PTFE dispersion fluid.
Step (2): 24.79 g of water, 13.6 g of ethanol, and 35.71 g of tetraethyl orthosilicate (TEOS) are stirred and mixed, and the resulting mixture is added to the PTFE dispersion fluid of step (1) and stirred evenly, followed by magnetically stirring at 25°C for 1 h, adjusting a pH of the system to 5-6 using 10% HNO₃, raising a temperature to 85°C for reaction for 20 h, performing a vacuum filtration, conducting a continuous cleaning for 6 h using an ion cleaning machine, and drying at 130°C for 5 h to obtain an inorganic-coated hydrophilic PTFE powder.
Step (3): the inorganic-coated hydrophilic PTFE powder obtained in step (2) is re-stirred and ultrasonically dispersed in 200 g of water, followed by adding 3 g of ethanol, 3 g of KH-560, and 0.75 g of water. Pure acetic acid is used to adjust a pH to 3-4. A magnetic stirring is conducted at 25°C for 30 min and room temperature for 2 h, followed by performing a vacuum filtration and drying at 120°C for 10 h to obtain a PTFE composite powder. A weight ratio of PTFE powder, inorganic powder, and surface treatment agent in the PTFE composite powder is 100:10:3.

### Embodiment 7

Step (1): 2 g of polyethylene glycol octylphenyl ether and 100 g of PTFE powder are added into 200 g of water for uniform dispersion, and 10% sodium hydroxide is used to adjust a pH value of the system to 9-10 to obtain a PTFE dispersion fluid.
Step (2): 12.4 g of water, 6.8 g of ethanol, and 17.86 g of TEOS are stirred and mixed, and the resulting mixture is added to the PTFE dispersion fluid of step (1) and stirred evenly, followed by magnetically stirring at 25°C for 1 h, adjusting a pH of the system to 5-6 using a 10% HCl solution, raising a temperature to 85°C for reaction for 20 h, performing a vacuum filtration, conducting a continuous cleaning for 6 h using an ion cleaning machine, and drying at 130°C for 5 h to obtain an inorganic-coated hydrophilic PTFE powder.
Step (3): the inorganic-coated hydrophilic PTFE powder obtained in step (2) is re-stirred and ultrasonically dispersed in 200 g of water, followed by adding 3 g of ethanol, 3 g of KH-560, and 0.75 g of water. Pure acetic acid is used to adjust a pH to 3-4. A magnetic stirring is conducted at 25°C for 30 min and room temperature for 2 h, followed by performing a vacuum filtration and drying at 120°C for 10 h to obtain a PTFE composite powder. A weight ratio of PTFE powder, inorganic powder, and surface treatment agent in the PTFE composite powder is 100:5:3.

### Embodiment 8

Step (1): 2 g of polyethylene glycol octylphenyl ether and 100 g of PTFE powder are added into 200 g of water for uniform dispersion, and 10% sodium hydroxide is used to adjust a pH value of the system to 9-10 to obtain a PTFE dispersion fluid.
Step (2): 49.58 g of water, 27.2 g of ethanol, and 71.43 g of TEOS are stirred and mixed, and the resulting mixture is added to the PTFE dispersion fluid of step (1) and stirred evenly, followed by magnetically stirring at 25°C for 1 h, adjusting a pH of the system to 5-6 using a 10% HF solution, raising a temperature to 85°C for reaction for 20 h, performing a vacuum filtration, conducting a continuous cleaning for 6 h using an ion cleaning machine, and drying at 130°C for 5 h to obtain an inorganic-coated hydrophilic PTFE powder.
Step (3): the inorganic-coated hydrophilic PTFE powder obtained in step (2) is put into a high-speed mixer, followed by adding 3 g of A-137 and stirring at a high speed of 500 r/min for 20 min. The resulting mixture is heated in an oven at 120°C for 30 min after being taken out to obtain a PTFE composite powder. A weight ratio of PTFE powder, inorganic powder, and surface treatment agent in the PTFE composite powder is 100:20:3.

### Embodiment 9

Step (1): 2 g of polyethylene glycol octylphenyl ether and 100 g of PTFE powder are added into a solvent consisting of 80 g of water and 20 g of N,N-dimethylformamide for uniform dispersion, and 10% sodium hydroxide is used to adjust a pH value to 9-10 to obtain a PTFE dispersion fluid.
Step (2): 49.58 g of water, 27.2 g of ethanol, and 71.43 g of TEOS are stirred and mixed, and the resulting mixture is added to the PTFE dispersion fluid of step (1) and stirred evenly, followed by magnetically stirring at 25°C for 1 h, adjusting a pH of the system to 5-6 using a 10% HF solution, raising a temperature to 85°C for reaction for 20 h, performing a vacuum filtration, conducting a continuous cleaning for 6 h using an ion cleaning machine, and drying at 130°C for 5 h to obtain an inorganic-coated hydrophilic PTFE powder.
Step (3): the inorganic-coated hydrophilic PTFE powder obtained in step (2) is re-stirred and ultrasonically dispersed in 200 g of water, followed by adding 3 g of ethanol, 3 g of KH-560, and 0.75 g of water. Pure acetic acid is used to adjust a pH to 3-4. A magnetic stirring is conducted at 25°C for 30 min and room temperature for 2 h, followed by performing a vacuum filtration and drying at 120°C for 10 h to obtain a PTFE composite powder. A weight ratio of PTFE powder, inorganic powder, and surface treatment agent in the PTFE composite powder is 100:20:3.

### Comparative Example

100 g of PTFE powder is added to 80 g of water and stirred, followed by adding 3 g of KH-560 and 0.75 g of water, adjusting a pH to 3-4 using pure acetic acid, magnetically stirring at 25°C for 30 min and room temperature for 2 h, performing a vacuum filtration, and drying at 120°C for 10 h to obtain a silane coupling agent-treated PTFE powder.

### Comparison of dielectric properties of different powders in epoxy system

100 parts of raw PTFE powder and 100 parts of each of the PTFE composite powders obtained in Embodiments 1-9 are respectively added into 100 parts of bisphenol A epoxy resin, 5 parts of 1,2-dimethylimidazole is added as a curing agent, and the resulting mixture is mixed and dispersed evenly. The resulting mixture is placed in a vacuum device to remove air therein, and cured for 8 h for later use. The obtained viscous material is slowly poured into a preheated mold, and then heated in a gradient style for curing to obtain a powder-filled epoxy resin composite material.

The dielectric constant and dielectric loss of the obtained epoxy resin composite material are tested by a broadband dielectric spectroscopy analyzer, and the data are listed in Table 1.

**Table 1 Dielectric constant and dielectric loss of epoxy resin composite material**

| Component | Dielectric constant (1GHz) | Dielectric loss (1GHz) |
|---|---|---|
| PTFE powder | 3.55 | 0.016 |
| Embodiment 1 | 3.64 | 0.006 |
| Embodiment 2 | 4.14 | 0.011 |
| Embodiment 3 | 3.74 | 0.008 |
| Embodiment 4 | 3.89 | 0.008 |
| Embodiment 5 | 3.74 | 0.007 |
| Embodiment 6 | 3.61 | 0.006 |
| Embodiment 7 | 3.58 | 0.006 |
| Embodiment 8 | 3.66 | 0.007 |
| Embodiment 9 | 3.66 | 0.006 |
| Comparative Example | 3.55 | 0.017 |

It can be seen from the data in Table 1 that the PTFE composite powders prepared by the present invention used in epoxy resin have significantly reduced dielectric loss compared with the pure PTFE powder under the condition of stable dielectric constant.

Although the comparative example undergoes a treatment with silane coupling agent, the data of treated powder are basically consistent with those of the untreated powder.

2 g of the raw PTFE powder used in Embodiments 1-9, 2 g of the prepared inorganic-coated hydrophilic PTFE powder, 2 g of the prepared PTFE composite powder, and 2 g of the treated PTFE powder of Comparative Example are weighed and respectively added to 100 ml of water for ultrasonic treatment for 5 min. A visible spectrophotometer is used to measure the light transmittance at 456 nm to characterize hydrophilicity and hydrophobicity. The data are listed in Table 2.

### Light transmittance of different powders in water

| Group | Light transmittance | | | |
|---|---|---|---|---|
| | PTFE powder | PTFE powder treated with KH560 in Comparative Example | Inorganic-coated hydrophilic PTFE powder | PTFE composite powder |
| Embodiment 1 | 100% | 100% | 0.4% | 100% |
| Embodiment 2 | | | 0.3% | 100% |
| Embodiment 3 | | | 0.5% | 99.7% |
| Embodiment 4 | | | 0.4% | 99.5% |
| Embodiment 5 | | | 0.3% | 100% |
| Embodiment 6 | | | 0.2% | 99.8% |
| Embodiment 7 | | | 0.1% | 99.3% |
| Embodiment 8 | | | 0.3% | 99.5% |
| Embodiment 9 | | | 0.2% | 99.7% |

Since the PTFE powder is completely hydrophobic and floats on the water surface, the measured light transmittance of the aqueous solution is 100%. For the PTFE powder treated with KH560 in Comparative Example, the PTFE powder is still hydrophobic and floats on the water surface because the coupling agent cannot be bonded to the PTFE surface. The inorganic-coated PTFE powder can be uniformly dispersed in water to form a suspension, and the light transmittance thereof is significantly reduced. The inorganic-coated hydrophilic PTFE powder is treated with a surface treatment agent, changing from hydrophilic to hydrophobic and floating on the water surface, and the light transmittance thereof is increased. The inorganic-coated hydrophilic PTFE composite powder after ultrasonic dispersion can stably form a suspension, indicating that the PTFE powder is not peeled off from the inorganic powder, and proving that the inorganic powder can be firmly coated on the surface of the PTFE powder.

The PTFE composite powders of the embodiments and the coupling agent-treated PTFE powder in Comparative Example are respectively added to the same amount of bisphenol A epoxy resin, followed by stirring and standing. The mixed solutions of the embodiments are not layered, while the mixed solution of Comparative Example is gradually layered, indicating that treatment with silane coupling agent does not effectively improve the compatibility of PTFE powder in organic matter.

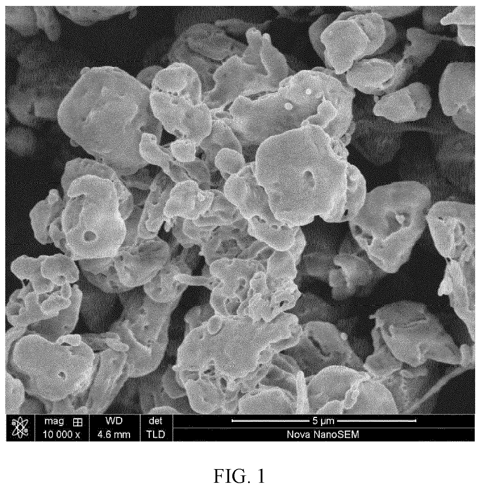

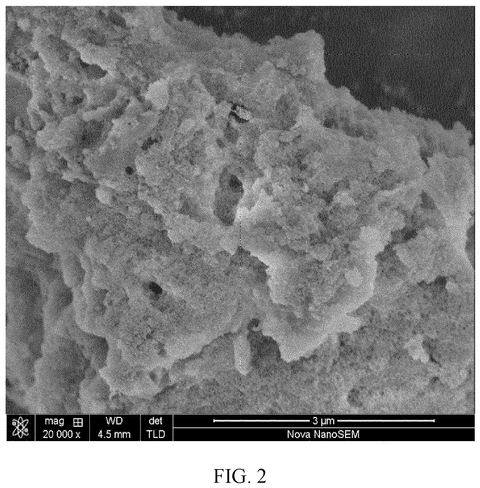

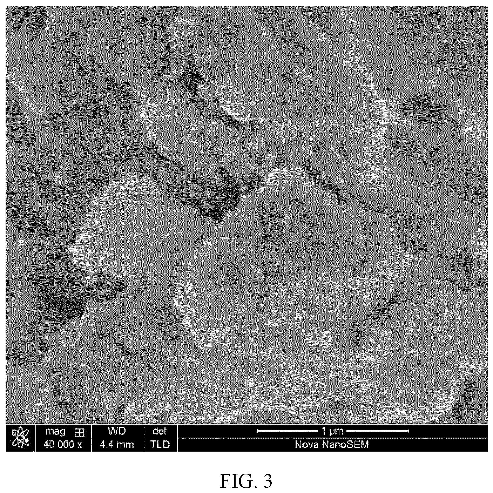

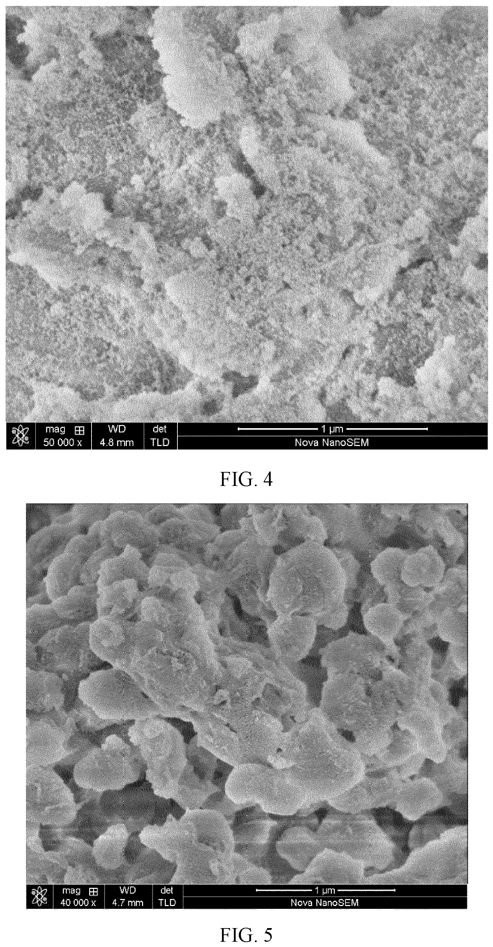

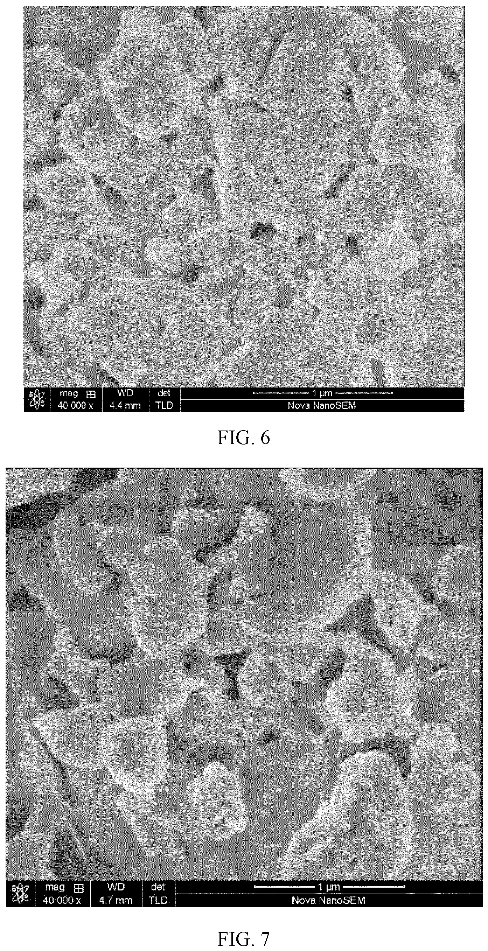

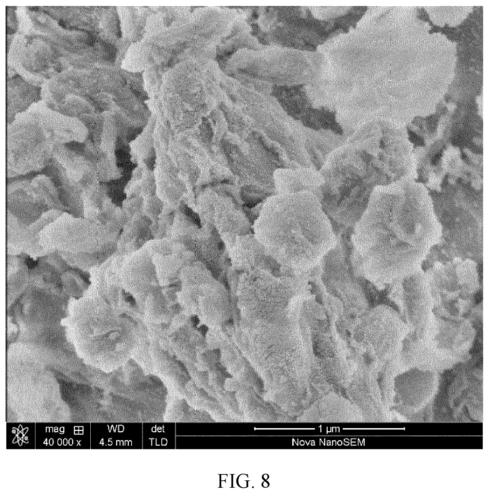

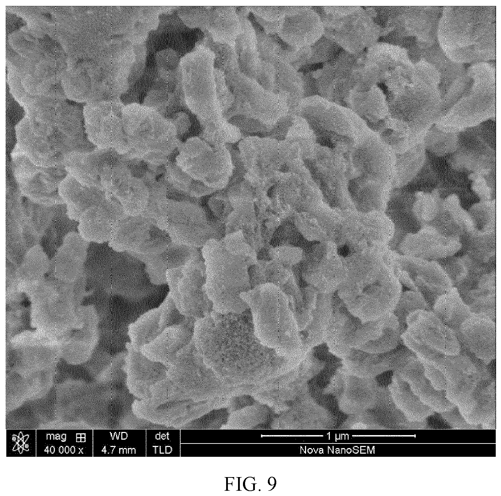

Comparing FIGS. 2-10 with FIG. 1, it can be seen that the inorganic powder forms a coating layer on the surface of the PTFE powder.

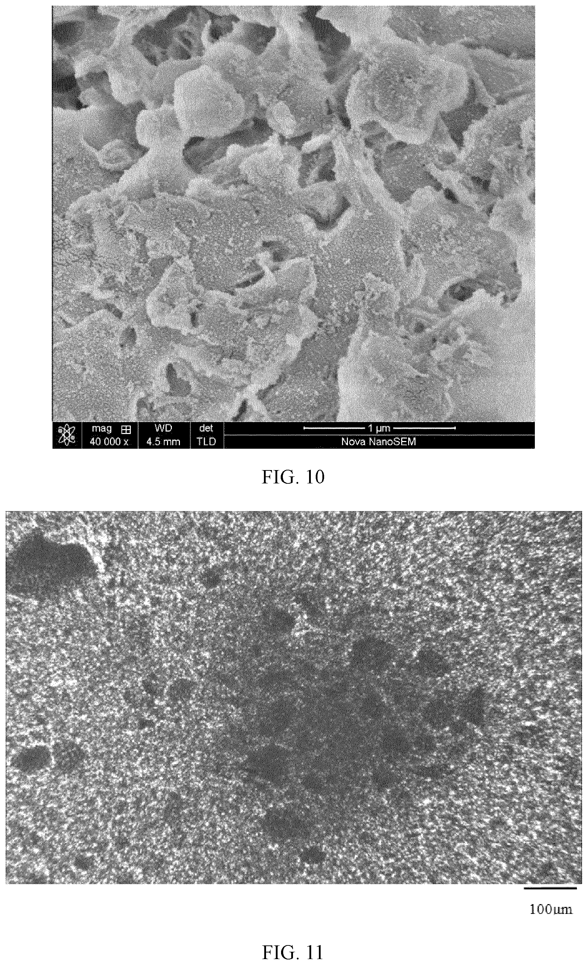

It can be seen from FIG. 11 that the PTFE powder agglomerates in epoxy resin.

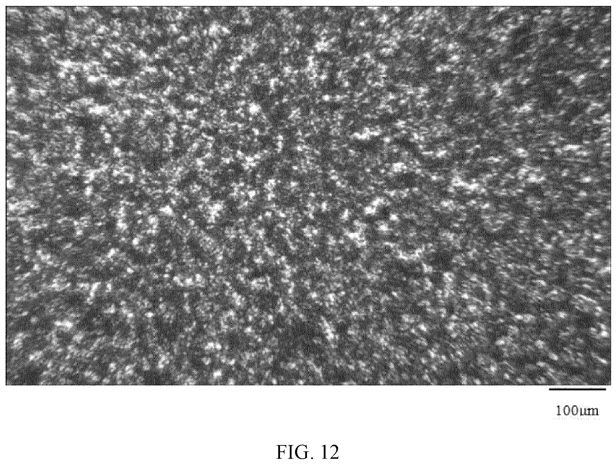

It can be seen from FIG. 12 that the PTFE composite powder prepared by the present invention is uniformly dispersed in epoxy resin.

The basic principles, main features, and advantages of the present invention are shown and described above. Those skilled in the art should understand that the present invention is not limited by the above-mentioned embodiments. The above-mentioned embodiments and descriptions only illustrate the principle of the present invention. Without departing from the spirit and scope of the present invention, the present invention will also have various changes and modifications, and these changes and modifications fall within the protection scope of the present invention. The protection scope of the present invention is defined by the appended claims and their equivalents.

## Claims

1. A polytetrafluoroethylene (PTFE) composite powder, comprising the following components: a PTFE powder, an inorganic powder, and a surface treatment agent, wherein the inorganic powder is coated on a surface of the PTFE powder to form an inorganic powder layer, and the surface treatment agent is coated on the inorganic powder layer.

2. The PTFE composite powder according to claim 1, wherein a mass ratio of the PTFE powder, the inorganic powder, and the surface treatment agent is 100:(1-50):(0.01-10); and a particle size of the PTFE powder is 0.2 µm to 40 µm.

3. The PTFE composite powder according to claim 1, wherein the inorganic powder comprises at least one of oxide, hydroxide, carbide, boride, sulfide, and nitride, and has a particle size of 1 nm to 0.4 µm.

4. The PTFE composite powder according to claim 1, wherein the surface treatment agent comprises one or more of a silane coupling agent, a titanate coupling agent, an aluminate coupling agent, stearic acid, and stearate.

5. A preparation method of the PTFE composite powder according to any one of claims 1-4, comprising the following steps:
step (1): adding a dispersant and the PTFE powder into a solvent consisting of at least one of water and an organic solvent to obtain a PTFE dispersion fluid;
step (2): stirring an inorganic powder precursor and the PTFE dispersion fluid of step (1) evenly, and adjusting a pH value to be alkaline, enabling the precursor to react and be deposited uniformly on the surface of the PTFE powder, filtering, washing with water, and drying to obtain an inorganic-coated hydrophilic PTFE powder;
step (3): treating the inorganic-coated hydrophilic PTFE powder obtained in step (2) with the surface treatment agent to obtain an organic-coated hydrophobic PTFE composite powder.

6. The preparation method of the PTFE composite powder according to claim 5, wherein the dispersant in step (1) is one or more of an anionic surfactant, a cationic surfactant, an amphoteric surfactant, and a nonionic surfactant.

7. The preparation method of the PTFE composite powder according to claim 6, wherein the anionic surfactant comprises those of higher fatty acid soap type, alkyl sulfate type, alkyl sulfonate type, alkyl phosphate type, and alkylamide betaine type; the cationic surfactant comprises those of quaternary ammonium salt type, pyridine halide type, imidazoline compound type, and alkyl phosphate substituted amine type; the amphoteric surfactant comprises those of amino acid type and betaine type; and the nonionic surfactant comprises those of polyoxyethylene ether type and polyol type.

8. The preparation method of the PTFE composite powder according to claim 5, wherein the organic solvent in step (1) comprises one or more of methanol, ethanol, acetone, ethylene glycol, isopropanol, dimethyl sulfoxide, N,N-dimethylformamide, N,N-dimethylacetamide, tetrahydrofuran, and dioxane.

9. The preparation method of the PTFE composite powder according to claim 5, wherein the inorganic powder precursor comprises aluminum nitrate, ethyl orthosilicate, methyl orthosilicate, tert-butyl ester silicate, silica sol, aluminum sol, sodium silicate, aluminum sulfate, sodium aluminate, aluminum chloride, trimethylaluminum, triethylaluminum, aluminum sec-butoxide, and aluminum isopropoxide.

10. The preparation method of the PTFE composite powder according to claim 5, wherein in step (2), at least one of inorganic powder, inorganic powder dispersion fluid, and inorganic powder sol can be added to perform coating together with the inorganic powder precursor.

11. A composite material, comprising the PTFE composite powder according to any one of claims 1-4 or a PTFE composite powder prepared by the preparation method according to any one of claims 6-10.

12. The composite material according to claim 11, wherein a matrix polymer of the composite material comprises at least one of epoxy resin, hydrocarbon resin, polyphenylene ether, and liquid crystal polymer.
